(19) Europäisches Patentamt
European Patent Office
Office européen des brevets

(11) EP 4 283 735 A1

(12) EUROPEAN PATENT APPLICATION
published in accordance with Art. 153(4) EPC

(43) Date of publication:
**29.11.2023 Bulletin 2023/48**

(21) Application number: **21921474.9**

(22) Date of filing: **10.12.2021**

(51) International Patent Classification (IPC):
***H01M 10/0567** (2010.01)* ***H01M 4/525** (2010.01)*
***H01M 4/587** (2010.01)* ***H01M 4/38** (2006.01)*
***H01M 4/36** (2006.01)* ***H01M 10/052** (2010.01)*

(52) Cooperative Patent Classification (CPC):
**H01M 4/0404; H01M 4/133; H01M 4/134; H01M 4/1395; H01M 4/36; H01M 4/38; H01M 4/382; H01M 4/485; H01M 4/505; H01M 4/525; H01M 4/587; H01M 4/622; H01M 4/625; H01M 4/661; H01M 10/052;** (Cont.)

(86) International application number:
**PCT/KR2021/018790**

(87) International publication number:
**WO 2022/158715 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021 KR 20210010352**

(71) Applicant: **Samsung SDI Co., Ltd.**
**Yongin-si, Gyeonggi-do 17084 (KR)**

(72) Inventors:
- **JEONG, Hye Jeong**
  **Yongin-si, Gyeonggi-do 17084 (KR)**
- **KIM, Soo Jin**
  **Yongin-si, Gyeonggi-do 17084 (KR)**
- **TSAY, Olga**
  **Yongin-si, Gyeonggi-do 17084 (KR)**
- **SHATUNOV, Pavel**
  **Yongin-si, Gyeonggi-do 17084 (KR)**
- **KIM, Yun Hee**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

# (54) ELECTROLYTE FOR LITHIUM BATTERY AND LITHIUM BATTERY COMPRISING SAME

(57) Disclosed are an electrolyte for a lithium battery and a lithium battery including the electrolyte. The electrolyte for a lithium battery may include: a lithium salt; a non-aqueous organic solvent; and an additive including a compound represented by Formula 1 disclosed herein and at least one compound from among compounds represented by Formula 2-1 and Formula 2-2 disclosed herein.

EP 4 283 735 A1

FIG. 1

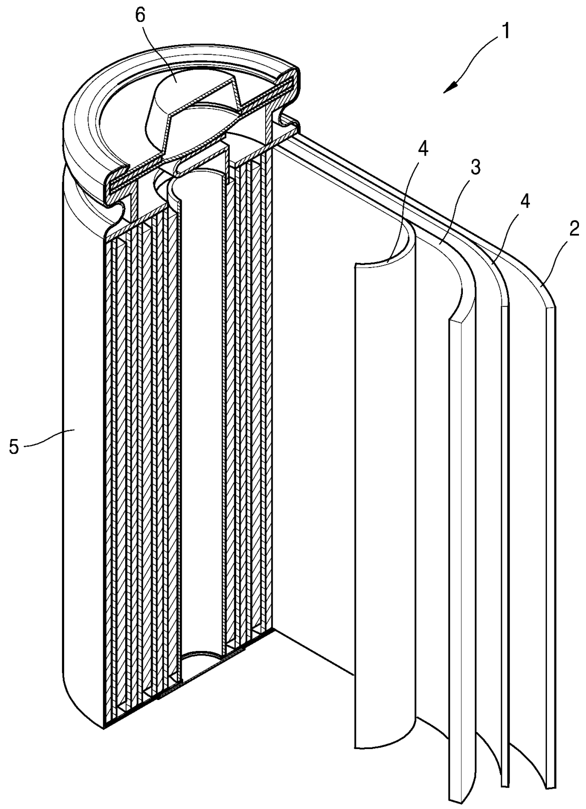


(52) Cooperative Patent Classification (CPC): (Cont.)
**H01M 10/0567; H01M 10/0569; H01M 10/4235; H01M 50/417;** H01M 2300/0028; Y02E 60/10

## Description

### TECHNICAL FIELD

Disclosed are an electrolyte for a lithium battery and a lithium battery including the electrolyte.

### BACKGROUND ART

Lithium secondary batteries are rechargeable at high rates and have an energy density per unit weight that is at least three times as large as that of existing lead storage batteries, nickel-cadmium batteries, nickel-hydrogen batteries, nickel-zinc batteries, etc.

Lithium batteries operate at a high driving voltage, and thus, an aqueous electrolytic solution that is highly reactive with lithium should not be used in lithium batteries. Generally, in lithium secondary batteries, an organic electrolytic solution is used. Organic electrolytic solutions are manufactured by dissolving a lithium salt in a non-aqueous organic solvent. It is preferable that the non-aqueous organic solvent is stable at high voltages and has high ion conductivity and permittivity, and low viscosity.

However, when an organic electrolytic solution is used as an electrolyte for a lithium secondary battery, lifespan characteristics and high-temperature stability of the lithium secondary battery may deteriorate due to side reactions between the negative electrode/positive electrode and the electrolyte.

To address these issues, additives are added to the electrolyte for a lithium secondary battery. However, such additives currently used thus far fail to provide sufficient battery lifespan characteristics and stability over a wide temperature range from room temperature to high temperatures.

In this context, there is a demand for an electrolyte for lithium batteries that provides battery lifespan characteristics and stability over a wide temperature range from room temperature to high temperatures, and a lithium battery including the electrolyte.

### DESCRIPTION OF EMBODIMENTS

### TECHNICAL PROBLEM

One aspect provides an electrolyte for a lithium battery, including a novel electrolyte additive.

Another aspect provides a lithium battery including the electrolyte.

### SOLUTION TO PROBLEM

One aspect of the disclosure provides an electrolyte for a lithium battery, the electrolyte including:

a lithium salt;
a non-aqueous organic solvent; and
an additive including a compound represented by Formula 1 and at least one compound from among compounds represented by Formula 2-1 and Formula 2-2:

Formula 1

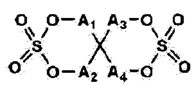

In Formula 1,
$A_1$, $A_2$, $A_3$, and $A_4$ may each independently be a single bond, an unsubstituted or substituted $C_1$-$C_5$ alkylene group, a carbonyl group, or a sulfinyl group.

Formula 2-1

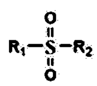

In Formula 2-1,

$R_1$ may be a hydrogen atom, a halogen atom, an unsubstituted or substituted $C_1$-$C_{20}$ alkyl group, or a $-(CH_2)_n-X$ group, wherein n may be an integer of 1 to 10 and X may be a halogen atom; and
$R_2$' may be a $-(CH2)_{n'}-N=C=O$ group or a $-(CH_2)_{m'}-N=C=S$ group, wherein n' and m' may each be from 0 to 10.

Formula 2-2

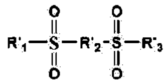

In Formula 2-2,

$R_1$' and $R'_3$ may each independently be $-(CH2)_{n'}-N=C=O$ group or $-(CH_2)m-N=C=S$ group, wherein n' and m' may each be from 0 to 10; and
$R'_2$ may be an unsubstituted or substituted $C_1$-$C_{20}$ alkylene group.

In Formula 1, $A_1$, $A_2$, $A_3$, and $A_4$ may each independently be an unsubstituted or substituted $C_1$-$C_5$ alkylene group, a carbonyl group, or a sulfinyl group, and
The substituted $C_1$-$C_5$ alkylene group may be a $C_1$-$C_5$ alkylene group substituted with at least one functional group selected from among a halogen atom, a $C_1$-$C_5$ alkyl group, a $C_1$-$C_5$ alkyl group substituted with a halogen atom, a $C_6$-$C_{20}$ aryl group, a $C_6$-$C_{20}$ aryl group substituted with a halogen atom, a $C_6$-$C_{20}$ heteroaryl group, or a $C_6$-$C_{20}$ heteroaryl group substituted with a halogen atom.
In Formula 2-1, $R_1$ may be a halogen atom, an unsubstituted or substituted $C_1$-$C_{20}$ alkyl group, or a $C_1$-$C_5$ alkyl group substituted with a halogen atom.
In Formula 2-1 and Formula 2-2, $R_2$, $R_1$', and $R'_3$ may be $-(CH_2)_{n'}-N=C=O$, wherein n' may be from 0 to 10.
The compounds represented by Formula 2-1 and Formula 2-2 may include one or more compounds represented by Formulas 3 to 7:

Formula 3

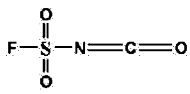

Formula 4

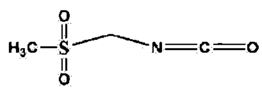

Formula 5

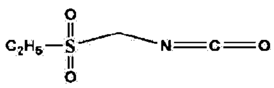

Formula 6

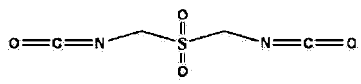

Formula 7

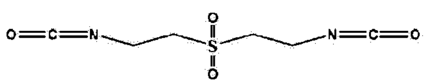

In the electrolyte, the content of a compound represented by Formula 1 may be equal to or greater than the content of one or more compounds from among compounds represented by Formula 2-1 and Formula 2-2.
In the electrolyte, the content of a compound represented by Formula 1 may be from 0.01 wt% to 5 wt% with respect to the total weight of the electrolyte.
In the electrolyte, the content of one or more compounds represented by Formula 2-1 and Formula 2-2 may be from 0.01 wt% to 3 wt% with respect to the total weight of the electrolyte.
According to another aspect of the disclosure, provided is a lithium battery including:

a positive electrode including a positive electrode active material;
a negative electrode including a negative electrode active material; and

the above-described electrolyte positioned between the positive electrode and the negative electrode.

The positive electrode active material may include a compound represented by Formula 9:

Formula 9 $LiNi_xCo_yM_{1-x-y}O_{2-z}A_z$

In Formula 9,

M may be at least one selected from among aluminum (Al), manganese (Mn), vanadium (V), magnesium (Mg), gallium (Ga), tungsten (W), molybdenum (Mo), iron (Fe), chromium (Cr), copper (Cu), zinc (Zn), and titanium (Ti);
A may be at least one selected from among F, S, Cl, and Br; and
$0 \leq x \leq 1, 0 \leq y \leq 1, 0 \leq z \leq 0.3$, and $x+y \leq 1$ may be satisfied.

In Formula 9, $0.8 \leq x < 1$ may be satisfied, and M may be at least one selected from among aluminum (Al), manganese (Mn), vanadium (V), magnesium (Mg), molybdenum (Mo), iron (Fe), chromium (Cr), copper (Cu), zinc (Zn), and titanium (Ti).
The negative electrode active material may include a carbon-based material, a silicon-based material, or a silicon-carbon-based composite.
The negative electrode active material may be a silicon-carbon composite, wherein the content of silicon may be 1 wt% or more with respect to the total weight of the silicon-carbon composite.

ADVANTAGEOUS EFFECTS OF DISCLOSURE

An electrolyte for a lithium battery according to an aspect of the disclosure includes an additive, the additive including a compound represented by Formula 1 and at least one compound from among compounds represented by Formula 2-1 and Formula 2-2. A lithium battery including the electrolyte may have improved stability at room temperature, at high temperatures, and at fast charging rates, as well as improved lifespan characteristics and storage characteristics at room temperature and at high temperatures.

BRIEF DESCRIPTION OF DRAWINGS

FIG. 1 is a schematic diagram of a lithium battery according to an embodiment.

MODE OF DISCLOSURE

Hereinbelow, with reference to Examples and the drawings of the present disclosure, an electrolyte for a lithium battery and a lithium battery including the electrolyte are described in greater detail. The following examples are for illustrative purposes only to describe the present disclosure in greater detail, and it will be apparent to those skilled in the art that these examples should not be construed as limiting the scope of the present disclosure.
Unless otherwise defined, all technical and scientific terms used herein have the same meaning as commonly understood by one of ordinary skill in the technical field to which the present application belongs. In the case of any inconsistencies, the present disclosure, including any definitions therein will prevail.
Methods and materials similar or equivalent to those described herein may be used in implementation or experiments of the present disclosure, but suitable methods and materials are described herein. As used herein, the singular forms are intended to include the plural forms as well, unless the context clearly indicates otherwise.
As used herein, the terms "comprises" and/or "comprising," or "includes" and/or "including" should be understood to specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof.
As used herein, the term "a combination thereof" refers to a mixture or combination of one or more of the described components.
As used herein, the term "and/or" includes any and all combinations of one or more of the associated listed items. The term "or" as used herein means "and/or". Expressions such as "at least one" and "one or more" as used herein, when preceding a list of elements, may modify the entire list of elements and do not modify the individual elements of the list.
In the drawings, the thicknesses of layers and regions may be exaggerated for clarity of description. Like reference numerals denote like elements throughout the specification. When a component, such as a layer, a film, a region, or a plate, is described as being "above" or "on" another component, the component may be directly above the

another component, or there may be yet another component therebetween. It will be understood that although the terms "first," "second," etc. may be used herein to describe various elements, these elements should not be limited by these terms. These terms are only used to distinguish one element from another element.

An electrolyte for a lithium battery according to an embodiment may include: a lithium salt; a non-aqueous organic solvent; and an additive including a compound represented by Formula 1 and at least one compound from among compounds represented by Formula 2-1 and Formula 2-2:

Formula 1

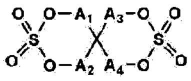

In Formula 1,
$A_1$, $A_2$, $A_3$, and $A_4$ each may be a single bond, an unsubstituted or substituted $C_1$-$C_5$ alkylene group, a carbonyl group, or a sulfinyl group.

Formula 2-1

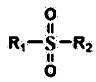

In Formula 2-1,

$R_1$ may be a hydrogen atom, a halogen atom, an unsubstituted or substituted $C_1$-$C_{20}$ alkyl group, or a -$(CH_2)_n$-X group, wherein n may be an integer of 1 to 10 and X may be a halogen atom; and
$R_2$’ may be a -(CH2)$_{n'}$-N=C=O group or a -($CH_2$)m-N=C=S group, wherein n’ and m’ may each be from 0 to 10. For example, n’ and m’ may each be from 0 to 5.

Formula 2-2

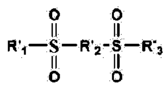

In Formula 2-2,

$R_1$’ and R’$_3$ may each independently be -(CH2)$_{n'}$-N=C=O or -$(CH_2)_{m'}$-N=C=S, wherein n’ and m’ may each be from 0 to 10, or from 1 to 5, or may each be 1;
R’$_2$ may be an unsubstituted or substituted $C_1$-$C_{20}$ alkylene group.

For example, in Formula 1, $A_1$, $A_2$, $A_3$, and $A_4$ may each independently be an unsubstituted or substituted $C_1$-$C_5$ alkylene group, a carbonyl group, or a sulfinyl group,
The substituted $C_1$-$C_5$ alkylene group may be a $C_1$-$C_5$ alkylene group substituted with at least one functional group selected from among a halogen atom, a $C_1$-$C_5$ alkyl group, a $C_1$-$C_5$ alkyl group substituted with a halogen atom, a $C_6$-$C_{20}$ aryl group, a $C_6$-$C_{20}$ aryl group substituted with a halogen atom, a $C_6$-$C_{20}$ heteroaryl group, or a $C_6$-$C_{20}$ heteroaryl group substituted with a halogen atom.

For example, in Formula 2-1, $R_1$ may be a halogen atom, an unsubstituted or substituted $C_1$-$C_{20}$ alkyl group, or a $C_1$-$C_5$alkyl group substituted with a halogen atom.

For example, in Formula 2-1 and Formula 2-2, $R_2$, $R_1$’, and R’$_3$ may each be - $(CH_2)_{n'}$-N=C=O, wherein n’ may be from 0 to 10. For example, n’ and may each be from 0 to 5.

An electrolyte for a lithium battery according to an embodiment may include, as an additive, a bicyclic sulfate-based compound, which is a compound represented by Formula 1 and an isocyanate-based compound or/and an isothiocyanate-based compound, which is a compound represented by Formula 2-1 or/and Formula 2-2. By including a compound represented by Formula 1 as an additive, a lithium battery having improved storage characteristics and lifespan characteristics at a high temperature of 60 °C may be provided. At the same time, by including compounds represented by Formula 2-1 and Formula 2-2, a lithium battery having improved lifespan characteristics at room temperature (25 °C) and at fast charging rates may be provided. Furthermore, by including a compound represented by Formula 1 and one or more compounds represented by Formula 2-1 and Formula 2-2, a lithium battery having ensured stability due to a decrease in the rate of direct current resistance increase at room temperature (25 °C), high temperature (60 °C), and at fast charging rates.

Without limiting the scope of the present disclosure and for better understanding, the mechanism by which the lifespan characteristics and stability of a lithium battery is improved by inclusion of the compound represented by Formula 1 and at least one of compounds represented by Formula 2-1 and Formula 2-2 as an additive will be described in greater detail below.

An electrolyte for a lithium battery includes the compound represented by Formula 1 as an additive. The compound, due to including a sulfate ester group, may be more easily reduced and/or decomposed into radicals and/or ions upon charging, thereby forming a solid SEI layer with improved stability at a negative electrode, or/and may be coordinated on a surface of a positive electrode, thereby forming a solid protection layer with improved stability on the surface of the positive electrode. In addition, unlike common sulfate-based compounds, the compound due to having a plurality of rings linked to each other in a spiro form, has a relatively larger molecular weight and thus, may be thermally stable. Accordingly, the compound represented by Formula 1 may provide a lithium battery having improved storage characteristics and lifespan characteristics at a high temperature of 60 °C.

In addition, the electrolyte for a lithium battery includes at least one compound from among compounds represented by Formula 2-1 and Formula 2-2 as an additive. The compound, due to including an isocyanate group or/and an isothiocyanate group, may undergo an adsorption reaction with a metal or a metal oxide present on a surface of an electrode, thereby forming an inert protective layer that is solid and dense. Accordingly, the compound represented by Formula 2-1 or/and Formula 2-2 may provide a lithium battery having improved high power output at room temperature (25 °C) and improved lifespan characteristics at high temperatures.

By including as an additive, a compound represented by Formula 1 and at least one compound from among compounds represented by Formula 2-1 and Formula 2-2, the electrolyte for a lithium battery may continuously form a more solid and stable protective layer on a surface of an electrode without interference. Accordingly, a lithium battery including the electrolyte for a lithium battery may have improved lifespan characteristics and storage characteristics at room temperature and high temperatures, and also ensure stability due to a significant drop in direct current internal resistance increase at room temperature (25 °C), high temperatures (60 °C), and fast charging rates.

For example, the compound represented by Formula 1 may include compounds represented by Formula 1-1 to Formula 1-9.

Formula 1-1

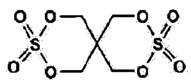

Formula 1-2

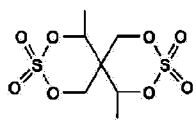

Formula 1-3

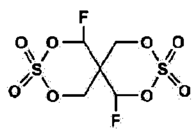

Formula 1-4

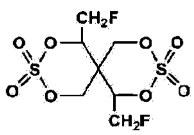

Formula 1-5

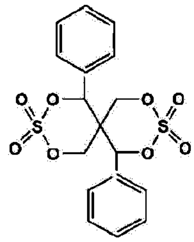

Formula 1-6

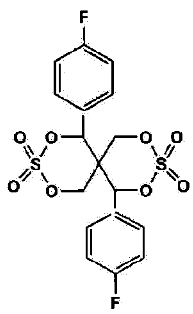

Formula 1-7

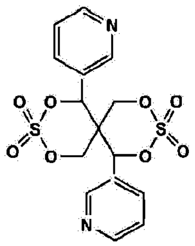

Formula 1-8

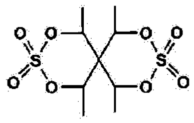

Formula 1-9

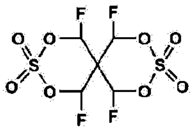

For example, the compounds represented by Formula 2-1 and Formula 2-2 may include one or more compounds represented by Formulas 3 to 7:

Formula 3

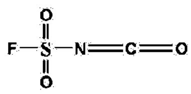

Formula 4

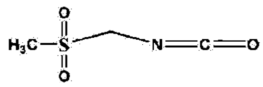

Formula 5

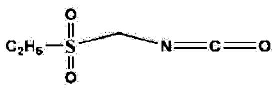

Formula 6

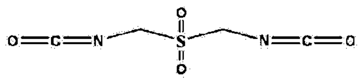

Formula 7

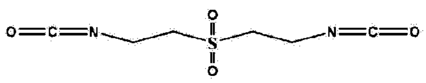

In the electrolyte, the content of a compound represented by Formula 1 may be equal to or greater than the content of one or more compounds from among compounds represented by Formula 2-1 and Formula 2-2. In the electrolyte, the content of one or more compounds represented by Formula 2-1 and Formula 2-2 may be smaller than the content of a compound represented by Formula 1. Accordingly, a lithium battery including the electrolyte may show an improvement not only in lifespan characteristics and storage characteristics at room temperature and at high temperatures, but also in stability at room temperature, at high temperatures, and at fast charging rates, while retaining the battery performance of when using the compound represented by Formula 1 as an additive.

In the electrolyte, the content of a compound represented by Formula 1 may be from 0.01 wt% to 5 wt% with respect to the total weight of the electrolyte. For example, the content of the compound represented by Formula 1 may be 0.01 wt% to 4 wt%, 0.01 wt% to 3 wt%, 0.01 wt% to 2 wt%, or 0.01 wt% to 1 wt%, with respect to the total weight of the electrolyte. Within the above content ranges, further improvement in battery performance may be achieved.

In the electrolyte, the content of one or more compounds from among compounds represented by Formula 2-1 and Formula 2-2 may be from 0.01 wt% to 3 wt% with respect to the total weight of the electrolyte. For example, in the electrolyte, the content of one or more compounds selected from among compounds represented by Formula 2-1 and Formula 2-2 may be 0.01 wt% to 2 wt% or 0.01 wt% to 1 wt% with respect to the total weight of the electrolyte. Within the above content ranges, a further improvement in battery performance may be achieved.

The lithium salt may include one or more selected from among $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (Here, $2 \leq x \leq 20$ and $2 \leq y \leq 20$), LiCl, LiDFOP (lithium difluoro bis(oxalato) phosphate), LiDFOB ((lithium difluoro bis(oxalato) borate), LiBOB (lithium bis oxalato borate), $LiPO_2F_2$, and LiI. In the electrolyte, the concentration of the lithium salt may be 0.01 M to 2.0 M, but is not necessarily limited to the aforementioned ranges and may be adjusted to an appropriate concentration as necessary. Within the above content ranges, a further improvement in battery performance may be achieved.

The non-aqueous organic solvent may include one or more selected from among ethylene carbonate (EC), ethyl methyl carbonate (EMC), methyl propyl carbonate, ethyl propyl carbonate, dimethyl carbonate (DMC), diethyl carbonate (DEC), dipropyl carbonate, propylene carbonate (PC), fluoroethylene carbonate (FEC), vinylene carbonate (VC), vinylethylene carbonate (VEC), butylene carbonate, ethyl propionate, ethyl butyrate, dimethylsulfoxide, dimethylformamide, dimethylacetamide, gamma-valerolactone, gamma-butyrolactone, and tetrahydrofuran. However, the non-aqueous organic solvent is not limited to the aforementioned examples, and any non-aqueous organic solvent available in the art may be used.

The electrolyte may be in a liquid or gel state.

A lithium battery according to another embodiment may include a positive electrode including a positive electrode active material; a negative electrode including a negative electrode active material; and the aforementioned electrolyte positioned between the positive electrode and the negative electrode. The lithium battery is not limited to any particular type, and may include lithium primary batteries as well as lithium secondary batteries such as a lithium ion battery, a lithium ion polymer battery, a lithium sulfur battery, and the like.

By including the aforementioned electrolyte, the lithium battery may have improved lifespan characteristics and storage characteristics at room temperature and at high temperatures, and also improved stability at room temperature, at high temperatures, and at a fast charging rate.

For example, the positive electrode active material may include a compound represented by Formula 9:

Formula 9 $LiNi_xCo_yM_{1-x-y}O_{2-z}A_z$

In Formula 9,

M may be at least one selected from among aluminum (Al), manganese (Mn), vanadium (V), magnesium (Mg), gallium (Ga), tungsten (W), molybdenum (Mo), iron (Fe), chromium (Cr), copper (Cu), zinc (Zn), and titanium (Ti);
A may be at least one selected from among F, S, Cl, and Br; and
$0 \le x \le 1, 0 \le y \le 1, 0 \le z \le 0.3$, and $x+y \le 1$ may be satisfied.

In Formula 9 above, $0.8 \le x < 1$ may be satisfied, and M may be at least one selected from among aluminum (Al), manganese (Mn), vanadium (V), magnesium (Mg), molybdenum (Mo), iron (Fe), chromium (Cr), copper (Cu), zinc (Zn), and titanium (Ti).

For example, the positive electrode active material may include a compound represented by Formula 10 or Formula 11:

Formula 10 $LiNi_{x'}Co_{y'}\text{-}Al_{z'}O_2$

In Formula 10,
$0.6 \le x' < 1$, $0 < y' < 1$, $0 \le z' \le 0.2$, and $x'+y'+z' \le 1$ may be satisfied. For example, $0.8 \le x' < 1$, $0 < y' \le 0.2$, $0 \le z' \le 0.2$, and $x'+y'+z' \le 1$ may be satisfied.

Formula 11 $LiNi_{x''}Co_{y''}Al_{z''}M_{(1-x-y-z)''}O_2$

In Formula 11,
$0.6 \le x''< 1$, $0 < y'' < 1$, $0 \le z'' \le 0.2$, and $x''+y''+z'' \le 1$ may be satisfied. For example, $0.8 \le x' < 1$, $0 < y' \le 0.2$, $0 \le z' \le 0.2$, and $x''+y''+z'' \le 1$ may be satisfied.

The negative electrode active material may include a carbon-based material, a silicon-based material, or a silicon-carbon-based composite.

The carbon-based material may be, for example, a crystalline carbon, an amorphous carbon, or a mixture thereof. The crystalline carbon may be graphite, including artificial graphite or natural graphite in shapeless, plate, flake, spherical or fiber form, and the amorphous carbon may be soft carbon (low-temperature calcined carbon) or hard carbon, mesophase pitch carbides, or calcined cokes.

The silicon-based material may include silicon particles, silicon alloy particles, or/and silicon nanowires, for example. For example, the silicon-based material may be silicon particles and may have an average particle diameter of 50 nm to 150 nm.

The silicon-carbon-based composite may be a composite having a structure in which silicon nanoparticles are positioned on a carbon-based compound, a composite containing silicon particles on surfaces and inside of a carbon-based compound, and a composite in which silicon particles are coated with a carbon-based compound and included inside the carbon-based compound. In a composite of a silicon-based compound and a carbon-based compound, the carbon-based compound may be graphite, graphene, a graphene oxide, or a combination thereof.

For example, the negative electrode active material may be a silicon-carbon composite, wherein the content of silicon may be 1 wt% or more with respect to the total weight of the silicon-carbon composite. For example, the negative electrode active material may be a silicon-carbon composite, wherein the content of silicon may be 2 wt% or more, 3 wt% or more, 4 wt% or more, or 5 wt% or more, with respect to the total weight of the silicon-carbon composite.

For example, the negative electrode active material may be an active material obtained by dispersion of silicon nanoparticles having an average particle diameter of about 200 nm or less on particles of a carbon-based compound, followed by carbon coating, an active material having silicon (Si) particles present on and within graphite, or the like. The silicon nanoparticles may have an average particle diameter of 50 nm to 150 nm. The average particle diameter of the silicon-carbon-based composite may be, for example, from 1 $\mu$m to 20 $\mu$m. A lithium battery including the negative electrode active material may have further improved initial efficiency, capacity, and lifespan characteristics.

The lithium battery may be prepared as follows.

First, a positive electrode may be prepared.

The positive electrode may be prepared by an exemplary method described below, but the method is not necessarily limited thereto and may be adjusted according to required conditions.

First, a positive electrode active material composition may be prepared by mixing the above-described composite positive electrode active material, a conducting agent, a binder, and a solvent. The positive electrode active material composition thus prepared may be directly coated or dried on an aluminum current collector to produce a positive electrode plate on which a positive electrode active material layer is formed. Alternatively, the positive electrode active material composition may be cast on a separate support, and a film exfoliated from the support may be laminated on the aluminum current collector to thereby form a positive electrode plate with a positive electrode active material layer formed thereon.

Examples of the conductive material may include: carbon black, graphite powder, natural graphite, artificial graphite, acetylene black, Ketjen black, and carbon fibers; carbon nanotubes; metal powder, metal fibers, or metal tubes, such as copper, nickel, aluminum, silver, etc.; and conductive polymers such as polyphenylene derivatives, and the like, but are not limited to the aforementioned components and may be any material available as a conducting agent in the art.

Examples of the binder may include a vinylidene fluoride/hexafluoropropylene copolymer, polyvinylidene fluoride, polyacrylonitrile, polymethylmethacrylate, polytetrafluoroethylene (PTFE), a mixture of the aforementioned polymers, a styrene butadiene rubber-based polymer, and the solvent may be N-methylpyrrolidone (NMP), acetone, water, or the like, but is not necessarily limited thereto and may be any solvent available in the art.

It is also possible to create pores inside an electrode plate by further adding a plasticizer and a pore forming agent to the positive electrode active material composition.

The contents of the positive electrode active material, the conducting agent, the binder, and the solvent used in the positive electrode may be at a level commonly used in a lithium battery. Depending on the intended use and composition of a lithium battery, one or more of the conductive material, the binder, and the solvent may be omitted. In addition to the positive electrode active material described above, the positive electrode active material may further include other positive electrode active materials as follows.

The positive electrode active material may be a lithium-containing metal oxide and may utilize, without any limitation, any lithium-containing metal oxide commonly available in the art. For example, the positive electrode active material may be one or more from among composite oxides of lithium with a metal selected from among cobalt, manganese, nickel, and a combination thereof. Specific examples of the composite oxides may include a compound represented by any one of the following formulas: $Li_aA_{1-b}B'_bD'_2$ (In the formula, $0.90 \leq a \leq 1$ and $0 \leq b \leq 0.5$); $Li_aE_{1-b}B'_bO_{2-c}D'_c$ (In the formula, $0.90 \leq a \leq 1$, $0 \leq b \leq 0.5$, and $0 \leq c \leq 0.05$); $LiE_{2-b}B'_bO_{4-c}D'_c$ (In the formula, $0 \leq b \leq 0.5$ and $0 \leq c \leq 0.05$); $Li_aNi_{1-b-c}Co_bB'_cD'_\alpha$ (In the formula, $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (In the formula, $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (In the formula, $0.90 \leq a \leq 1$, $0 \leq b \leq 0.5$, $0 \leq c \leq 0.05$, and $0 < \alpha < 2$); $Li_aNi_{1-b-c}Mn_bB'_cD'_\alpha$ (In the formula, $0.90 \leq a \leq 1$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (In the formula, $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (In the formula, $0.90 \leq a \leq 1$, $0 \leq b \leq 0.5$, $0 \leq c \leq 0.05$, and $0 < \alpha < 2$); $Li_aNi_bE_cG_dO_2$ (In the formula, $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (In the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (In the formula, $0.90 \leq a \leq 1$ and $0.001 \leq b \leq 0.1$); $Li_aCoG_bO_2$ (In the formula, $0.90 \leq a \leq 1$ and $0.001 \leq b \leq 0.1$); $Li_aMnG_bO_2$ (In the formula, $0.90 \leq a \leq 1$ and $0.001 \leq b \leq 0.1$); $Li_aMn_2G_bO_4$ (In the formula, $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In the formulas representing the above-described compound, A is Ni, Co, Mn, or a combination thereof; B' is Al, Ni, Co, Mn, Cr, Fe, Mg, Sr, V, a rare-earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. A compound having a coating layer added on a surface of the above-described compound may also be used, and a mixture of the above compound and a compound having a coating layer added thereon may also be used. The coating layer added on the surface of the above-described compound may include, for example, compounds of a coating element, such as oxides and hydroxides of the coating element, oxyhydroxides of the coating element, oxycarbonates of the coating element, and hydroxycarbonates of the coating element. Compounds forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. The

method of forming a coating layer may selected from methods that do not adversely affect the physical properties of positive electrode active material.

Examples of a coating method may include spray coating, dip coating, and the like.

Specific coating methods are well known by those of ordinary skill in the art, and therefore detailed descriptions thereof will be omitted. Next, a negative electrode may be prepared as follows. The negative electrode may be prepared by substantially the same method as the positive electrode, except that for example, a negative electrode active material may be used instead of the positive electrode active material. In addition, substantially the same conducting agent, binder, and solvent as those used for the positive electrode may be used in a negative electrode active material composition. For example, the negative electrode active material composition may be prepared by mixing a negative electrode active material, a conducting agent, a binder, and a solvent, and the negative electrode active material composition thus prepared may be directly coated on a copper current collector, to thereby form a negative electrode plate. Alternatively, the negative electrode active material composition thus prepared may be cast on a separate support, and a negative electrode active material film exfoliated from the support may be laminated on a copper current collector, to thereby form a negative electrode plate. The negative electrode active material may be, other than the above-described negative electrode active material, any material available as a negative electrode active material of a lithium battery in the art.

For example, the negative electrode active material may include one or more selected from among lithium metal, a metal alloyable with lithium, a transition metal oxide, a non-transition metal oxide, and a carbon-based material. Examples of the metal alloyable with lithium may include Si, Sn, Al, Ge, Pb, Bi, Sb, a Si-Y' alloy (wherein Y' is an alkali metal, an alkaline earth metal, an element of Group 13, an element of Group 14, a transition metal, a rare earth metal, or a combination thereof, but not Si), a Sn-Y' alloy (wherein Y' is an alkali metal, an alkaline earth metal, an element of Group 13, an element of Group 14, a transition metal, a rare-earth metal, or a combination thereof, but not Sn) and the like. Examples of Y' may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide may include a lithium titanium oxide, a vanadium oxide, a lithium vanadium oxide, or the like. Examples of the non-transition metal oxide may include $SnO_2$, $SiO_x$ ($0<x<2$), or the like.

Examples of the carbon-based material may include a crystalline carbon, an amorphous carbon, or a mixture thereof. Examples of the crystalline carbon may include graphite, including artificial graphite or natural graphite in shapeless, plate, flake, spherical or fiber form.

Examples of the amorphous carbon may include soft carbon (low-temperature calcined carbon) or hard carbon, mesophase pitch carbides, calcined cokes, and the like. The contents of the negative electrode active material, the conducting agent, the binder, and the solvent may be at a level commonly used in lithium batteries.

Depending on the intended use and composition of a lithium battery, one or more of the conductive material, the binder, and the solvent may be omitted.

Next, a separator to be placed between the positive electrode and the negative electrode may be prepared.

The separator may be any separator commonly used in lithium secondary batteries. Any separator capable of retaining a large quantity of an electrolyte while exhibiting low resistance to ion migration in the electrolyte may be used. For example, the separator may be any material selected from among glass fiber, polyester, Teflon, polyethylene, polypropylene, polytetrafluoroethylene (PTFE), and a combination thereof. In addition, the separator may be in the form of nonwoven fabric or woven fabric.

For example, a lithium ion battery may include a rollable separator formed of polyethylene, polypropylene, or the like, and a lithium ion polymer battery may include a separator having an excellent electrolyte impregnation capacity. For example, the separator may be prepared as follows.

A separator composition may be prepared by mixing a polymer resin, a filler, and a solvent.

The separator composition may be directly coated and dried on top of an electrode to thereby form a separator. Alternatively, the separator composition may be cast and dried on a support, and a separator film exfoliated from the support may be laminated on top of an electrode to thereby form a separator. The polymer resin for use in the preparation of the separator above is not limited to any particular material, and any material used for a binder of an electrode may be used. For example, a vinylidene fluoride/hexafluoropropylene copolymer, polyvinylidene fluoride (PVDF), polyacrylonitrile, polymethyl methacrylate, or a mixture thereof may be used as the polymer resin. Next, the above-described electrolyte may be prepared.

The electrolyte may further include an organic solid electrolyte or/and an inorganic solid electrolyte in addition to the above-described electrolyte. Examples of the organic solid electrolyte may include a polyethylene derivative, a polyethylene oxide derivative, a polypropylene oxide derivative, a phosphoric acid ester polymer, polyester sulfide, polyvinyl alcohol, polyvinylidene fluoride, and the like. Examples of the inorganic solid electrolyte may include a boron oxide, a lithium oxynitride, and the like, but are not limited thereto and may be any material available as a solid electrolyte in the art.

The inorganic solid electrolyte may be formed on the negative electrode by a method such as sputtering, for

example, or a separate solid electrolyte sheet may be stacked on the negative electrode. As shown in FIG. 1, a lithium battery 1 includes a positive electrode 3, a negative electrode 2, and a composite separator 4.

The positive electrode 3, the negative electrode 2, and the composite separator 4 may be wound or folded so as to be accommodated in a battery case 5.

The battery case 5 may be injected with an electrolyte and sealed with a cap assembly 6, thereby completing the manufacture of the lithium battery 1.

The battery case 5 may have a cylindrical shape, but is not necessarily limited thereto and may have a polygonal shape, a thin-film shape, and the like.

For example, a pouch-type lithium battery may include one or more battery structures. A separator may be disposed between a positive electrode and a negative electrode to thereby form a battery structure. The battery structures may be stacked in a bi-cell structure and immersed in an organic electrolyte, and then accommodated and sealed in a pouch, thereby completing the manufacture of a pouch-type lithium battery. A plurality of battery structures may be stacked to form a battery pack, and such a battery pack may be used in any and all devices that require high capacity and high power output. For example, the battery pack may be used in a laptop computer, a smartphone, an electric vehicle, and the like.

The lithium battery due to having excellent lifespan characteristics and high-rate characteristics may be used in an electric vehicle (EV) and the like. For example, the lithium battery may be used in a hybrid vehicle, such as a plug-in hybrid electric vehicle (PHEV) and the like. Also, the lithium battery may be used in any field that requires a large amount of energy storage. For example, the lithium battery may be used in an electric bicycle, a power tool, and the like.

As used herein, a and b in "$C_a$-$C_b$" represent the number of carbon atoms in a functional group. Here, the functional group may include a to b number of carbon atoms. For example, "$C_1$-$C_4$alkyl group" refers to an alkyl group having 1 to 4 carbon atoms, such as $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

A particular radical may be called a mono-radical or a di-radical depending on the context. For example, when a substituent group needs two binding sites for binding with the rest of the molecule, the substituent may be understood as a di-radical. For example, a substituent group specified as an alkyl group that needs two binding sites may be a di-radical, such as $-CH_2-$, $-CH_2CH_2-$, and $-CH_2CH(CH_3)CH_2-$. The term "alkylene" as used herein clearly indicates that the radical is a di-radical.

The terms "alkyl group" and "alkylene group" as used herein refer to a branched or unbranched aliphatic hydrocarbon group. In an embodiment, the alkyl group may be substituted or unsubstituted. Examples of the alkyl group include, without being limited to a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, and a cycloheptyl group, each of which may be optionally substituted or unsubstituted. In an embodiment, the alkyl group may have 1 to 6 carbon atoms. For example, a $C_1$-$C_6$ alkyl group may be methyl, ethyl, propyl, isopropyl, butyl, iso-butyl, sec-butyl, pentyl, 3-pentyl, hexyl, or the like, without being necessarily limited thereto.

The term "cycloalkyl group" as used herein means a fully saturated carbocyclic ring or ring system. For example, the cycloalkyl group may be cyclopropyl, cyclobutyl, cyclopentyl, and cyclohexyl.

The term "alkenyl group" as used herein refers to a hydrocarbon group having 2 to 20 carbon atoms with at least one carbon-carbon double bond. Examples of the alkenyl group include an ethenyl group, a 1-propenyl group, a 2-propenyl group, a 2-methyl-1-propenyl group, a 1-butenyl group, a 2-butenyl group, a cyclopropenyl group, a cyclopentenyl group, a cyclohexenyl group, and a cycloheptenyl group. In an embodiment, the alkenyl group may be substituted or unsubstituted. In an embodiment, the alkenyl group may have 2 to 40 carbon atoms.

The term "alkynyl group" as used herein refers to a hydrocarbon group having 2 to 20 carbon atoms with at least one carbon-carbon triple bond. Examples of the alkynyl group include an ethynyl group, a 1-propynyl group, a 1-butynyl group, and a 2-butynyl group, but are not limited thereto. In an embodiment, the alkynyl group may be substituted or unsubstituted. In an embodiment, the alkynyl group may have 2 to 40 carbon atoms.

The term "aromatic" as used herein refers to a ring or ring system with a conjugated n electron system, and may refer to a carbocyclic aromatic group (e.g., a phenyl group) and a heterocyclic aromatic group (e.g., pyridine). In this regard, an aromatic ring system as a whole may include a monocyclic ring or a fused polycyclic ring (i.e., a ring that shares adjacent atom pairs).

The term "aryl group" as used herein refers to an aromatic ring or ring system (i.e., a ring fused from at least two rings that shares two adjacent carbon atoms) having only carbon atoms in its backbone. When the aryl group is a ring system, each ring in the ring system is aromatic. Examples of the aryl group include a phenyl group, a biphenyl group, a naphthyl group, a phenanthrenyl group, and naphthacenyl group, but are not limited thereto. These aryl groups may be substituted or unsubstituted.

The term "heteroaryl group" as used herein refers to an aromatic ring system with one ring or plural fused rings, in which at least one ring atom is not carbon, i.e., a heteroatom. In the fused ring system, at least one heteroatom may be present in only one ring. For example, the heteroatom may be oxygen, sulfur, or nitrogen, but is not limited thereto.

Examples of the heteroaryl group include, but are not limited to a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, and an indolyl group.

The terms "aralkyl group" and "alkylaryl group" as used herein refer to an aryl group linked as a substituent via an alkylene group, such as a $C_7$-$C_{14}$ aralkyl group. Examples of the aralkyl group or alkylaryl group include a benzyl group, a 2-phenylethyl group, a 3-phenylpropyl group, and a naphthylalkyl group, but are not limited thereto. In an embodiment, the alkylene group may be a lower alkylene group (i.e., a $C_1$-$C_4$ alkylene group).

The term "cycloalkenyl group" as used herein refers to a non-aromatic carbocyclic ring or ring system with at least one double bond. For example, the cycloalkenyl group may be a cyclohexenyl group.

The term "heterocyclic group" as used herein refers to a non-aromatic ring or ring system having at least one heteroatom in its ring backbone.

The term "halogen" as used herein refers to a stable element belonging to Group 17 of the periodic table, for example, fluorine, chlorine, bromine, or iodine. In particular, the halogen may be fluorine and/or chlorine.

In the present specification, a substituent may be derived by substitution of at least one hydrogen atom in an unsubstituted mother group with another atom or a functional group. Unless stated otherwise, the term "substituted" means that the aforementioned functional groups are substituted with at least one substituent selected from a $C_1$-$C_{40}$ alkyl group, a $C_2$-$C_{40}$ alkenyl group, a $C_3$-$C_{40}$ cycloalkyl group, a $C_3$-$C_{40}$ cycloalkenyl group, and a $C_7$-$C_{40}$ aryl group. The phrase "optionally substituted" as used herein means that the aforementioned functional groups may be substituted with the aforementioned substituents.

The present disclosure will be described in greater detail through Examples and Comparative Examples below. However, it will be understood that the Examples are only for illustrating the present disclosure, and are not to be construed as limiting the scope of the present disclosure.

(Preparation of Electrolyte)

**Example 1: Formula 1-1 1 wt% + Formula 3 0.5 wt%**

1.15 M $LiPF_6$ and vinylene carbonate were added to a mixed solvent of ethylene carbonate (EC), ethyl methyl carbonate (EMC), and dimethyl carbonate (DMC) in a volume ratio of 2:4:4. 1 wt% of the compound represented by Formula 1-1 below and 0.5 wt% of the compound represented by Formula 3 below were added to the mixed solvent to prepare an electrolyte.

Formula 1-1

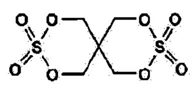

Formula 3

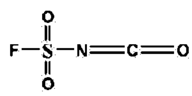

**Example 2: Formula 1-1 1 wt% + Formula 6 0.5 wt%**

An electrolyte was prepared following the same method as Example 1, except that 1 wt% of the compound represented by Formula 1-1 above and 0.5 wt% of the compound represented by Formula 6 below were added to the mixed solvent.

Formula 6

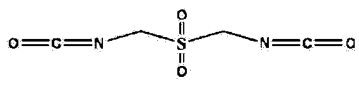

**Example 3: Formula 1-1 1 wt% + Formula 3 1 wt%**

An electrolyte was prepared following the same method as Example 1, except that 1 wt% of the compound represented by Formula 1-1 above and 1 wt% of the compound represented by Formula 3 above were added to the mixed solvent to prepare an electrolyte.

**Comparative Example 1**

1.15 M $LiPF_6$ and vinylene carbonate were added to a mixed solvent of ethylene carbonate (EC), ethyl methyl carbonate (EMC), and dimethyl carbonate (DMC) in a volume ratio of 2:4:4 to prepare an electrolyte.

**Comparative Example 2: Formula 1-1 1 wt%**

An electrolyte was prepared following the same method as Example 1, except that 1 wt% of the compound represented by Formula 1-1 above was added to the mixed solvent.

**Comparative Example 3: Formula 3 0.5 wt%**

An electrolyte was prepared following the same method as Example 1, except that 0.5 wt% of the compound represented by Formula 3 above was added to the mixed solvent.

**Comparative Example 4: Formula 6 0.5 wt%**

An electrolyte was prepared following the same method as Example 1, except that 0.5 wt% of the compound represented by Formula 6 above was added to the mixed solvent.

**Comparative Example 5: Formula 1-1 1 wt% + Formula 8 0.5 wt%**

An electrolyte was prepared following the same method as Example 1, except that 1 wt% of the compound represented by Formula 1-1 above and 0.5 wt% of divinylsulfone represented by Formula 8 below were added to the mixed solvent.

Formula 8

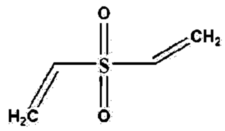

**Comparative Example 6: Formula 1-1 1 wt% + Formula 3 5 wt%**

An electrolyte was prepared following the same method as Example 1, except that 1 wt% of the compound represented by Formula 1-1 above and 5 wt% of the compound represented by Formula 3 above were added to the mixed solvent.

(Preparation of Lithium Secondary Battery)

**Example 4:**

87 wt% of graphite, 10.5 wt% of a silicon-carbon-based compound composite, 1.5 wt% of styrene-butadiene rubber (SBR), and 1 wt % of carboxymethyl cellulose (CMC) were mixed together, the mixture was added to distilled water, and the resulting solution was stirred using a mechanical stirrer for 60 minutes to prepare a negative electrode active material slurry. The slurry was applied, using a doctor blade, onto a copper current collector having a thickness of 10 μm to a thickness of about 60 μm, and the coated current collector was dried in a hot-air dryer at 100 °C for 0.5 hours, followed by further drying in vacuum at 120 °C for 4 hours, and roll-pressed, thereby completing the manufacture of a negative electrode. As the silicon-carbon compound composite, a carbon-silicon composite containing carbon-coated silicon particles was used.

97 wt% of $LiNi_{0.8}Co_{0.1}Al_{0.1}O_2$ (NCA), 0.5 wt% of artificial graphite powder as a conducting agent, 0.8 wt% of carbon black (Ketjen black), 0.2 wt% of modified acrylonitrile rubber (BM-720H manufactured by Zeon Corporation), and 1.5 wt% of polyvinylidene fluoride (PVdF) were mixed together, the mixture was added to N-methyl-2-pyrrolidone, and the resulting solution was stirred using a mechanical stirrer for 30 minutes to prepare a positive electrode active material slurry. The slurry was applied, using a doctor blade, onto an aluminum current collector having a thickness of 20 μm to a thickness of about 60 μm, and the coated current collector was dried in a hot-air dryer at 100 °C for 0.5 hours, followed by further drying in vacuum at 120 °C for 4 hours, and roll-pressed, thereby completing the manufacture

of a positive electrode.

A polyethylene separator having a thickness of 14 μm, a positive electrode side of which was coated with ceramic, was used as a separator and the electrolyte prepared in Example 1 was used as an electrolyte, to complete the manufacture of a cylindrical lithium battery.

**Examples 5-6**

A lithium secondary battery was prepared following the same process as in Example 4, except that the electrolytes prepared in Examples 2 and 3 were used instead of the electrolyte prepared in Example 1.

**Comparative Examples 7-12**

A lithium secondary battery was prepared following the same process as in Example 4, except that the electrolytes prepared in Comparative Examples 1-6 were used instead of the electrolyte prepared in Example 1.

**Evaluation Example 1: Initial Direct Current Internal Resistance (DC-IR) at Room Temperature (25 °C) and DC-IR Increase after Storage at High Temperature**

Lithium secondary batteries prepared in Examples 4-6 and Comparative Examples 7-12 were tested under the conditions of 25 °C and 1 C/10 sec. discharge (SOC 100) and initial DC-IRs were calculated from $\Delta V/\Delta I$ (change in voltage/change in current) values with respect to the lithium secondary batteries prior to high-temperature storage in 60 °C oven. Thereafter, resistances were measured after 30-day storage at high temperature (60 °C), and DCIR increases (%) were calculated by Equation 1 below.

The results thereof are shown in Table 1 below.

Equation 1

$$\text{DCIR Increase} = [\text{DCIR}(30\ \text{d.}) - \text{DCIR}(0\ \text{d.})]/\text{DCIR}(0\ \text{d.}) \times 100\%$$

In Equation 1, DCIR(30 d.) represents DCIR after 30 days, and DCIR(0 d.) represents DCIR right before storage.

[Table 1]

| Item | Initial direct current internal resistance (DCIR, mΩ) | DCIR increase (%), after 30 day-storage at 60 °C |
|---|---|---|
| Example 4 | 21.43 | 25 |
| Example 5 | 21.82 | 24 |
| Example 6 | 21.91 | 22 |
| Comparative Example 7 | 21.28 | 34 |
| Comparative Example 8 | 21.46 | 28 |
| Comparative Example 9 | 21.19 | 32 |
| Comparative Example 10 | 21.29 | 31 |
| Comparative Example 11 | 21.90 | 26 |
| Comparative Example 12 | 22.50 | 25 |

As shown in Table 1, the lithium secondary batteries prepared in Examples 4-6 showed lower DCIR increases after 30-day storage at high temperature (60 °C) than those of the lithium secondary batteries prepared in Comparative Examples 7-11 (no use of additives in the electrolyte, use of the compound represented by Formula 1-1 alone, the compound represented by Formula 3 alone, or the compound represented by Formula 6 alone, as additive in the electrolyte, and use of the compound represented by Formula 1-1 and the compound represented by Formula 8 as additive in the electrolyte). In the lithium secondary batteries prepared in Examples 4-6, a small amount of an isocyanate-based compound represented by Formula 3 or Formula 6 was also used as an electrolyte additive other than the bicyclic sulfate-based compound. It is considered that since each additive included in the electrolyte can be present in an

electrolyte bulk or form a stable film on an electrode surface without interfering one another, side reactions between the electrode and the electrolyte may be continuously inhibited.

**Evaluation Example 2: Room-Temperature (25 °C) Charge-Discharge Characteristics and Room-Temperature DCIR Increase**

Room-temperature (25 °C) charge-discharge characteristics and room-temperature DC-IR increases of the lithium secondary batteries prepared in Examples 4-6 and Comparative Examples 7-12 were measured and evaluated as follows. The results thereof are shown in Table 2 below.

2-1: Room-temperature (25 °C) Charge-Discharge Characteristics

The lithium secondary batteries prepared in Examples 4-6 and Comparative Examples 7-12 were charged with a constant current of 0.5 C rate at 25 °C until the voltage reached 4.2 V, and then in a constant voltage mode while maintaining a voltage of 4.25 V, the charging process was cut off at a current rate of 0.2 C. Subsequently, each lithium secondary battery was discharged with a constant current of 0.5 C rate until the voltage reached 2.8 V during discharging. This cycle of charging and discharging was repeated 60 times. In all the cycles of charging and discharging, a rest period of 10 minutes was provided at the end of each cycle of charging/discharging. Capacity retention ratio at the $60^{th}$ cycle is defined using Equation 1 below.

Equation 2

$$\text{Capacity retention ratio (\%)}=[\text{Discharge capacity at } 60^{th} \text{ cycle/Discharge capacity at } 1^{st} \text{ cycle}]\times 100$$

2-2: Room-Temperature (25 °C) DCIR Increase

The lithium secondary batteries prepared in Examples 4-6 and Comparative Examples 7-12 were tested at 25 °C under the conditions of 1 C/10 sec. discharge (SOC 100) and then subjected to 60 cycles of charging and discharging as described above in the "2-1: Room-Temperature (25 °C) Charge-Discharge Characteristics". Resistances were measured after 60 cycles of charging and discharging, and DCIR increases (%) were calculated by Equation 3 below.

Equation 3

$$\text{DCIR Increase}=\text{DCIR(60 charge-discharge cycles)/DCIR(0d.)} \times 100\%$$

In Equation 3, DCIR(60 charge-discharge cycles) represents DCIR after 60 charge-discharge cycles at 25 °C, and DCIR(0d.) represents DCIR right before the 60 charge-discharge cycles.

[Table 2]

| Item | Capacity retention ratio (%) at 25 °C | DCIR increase (%), after 60 charge-discharge cycles at 25 °C |
|---|---|---|
| Example 4 | 92.27 | 9.25 |
| Example 5 | 92.61 | 8.62 |
| Example 6 | 92.40 | 8.90 |
| Comparative Example 7 | 93.15 | 10.81 |
| Comparative Example 8 | 92.20 | 10.55 |
| Comparative Example 9 | 93.26 | 9.38 |
| Comparative Example 10 | 93.38 | 9.14 |
| Comparative Example 11 | 91.80 | 10.91 |

(continued)

| Item | Capacity retention ratio (%) at 25 °C | DCIR increase (%), after 60 charge-discharge cycles at 25 °C |
|---|---|---|
| Comparative Example 12 | 92.00 | 9.80 |

As shown in Table 2, the lithium secondary batteries prepared in Examples 4-6 showed higher capacity retention ratios at 25 °C than those of the lithium secondary batteries prepared in Comparative Example 8 (using the compound represented by Formula 1-1 alone), Comparative Examples 11-12 (using the compound represented by Formula 1-1 and the compound represented by Formula 8 as additive in the electrolyte, and using 5 wt% of the compound represented by Formula 1-1, and the compound represented by Formula 3 as additive in the electrolyte). The lithium secondary batteries prepared in Examples 4-6 showed lower DC-IR increases at 25 °C than those of the lithium secondary batteries prepared in Comparative Examples 7-9 (no use of additives in the electrolyte, use of the compound represented by Formula 1-1 alone, use of the compound represented by Formula 3 alone as additive in the electrolyte), Comparative Examples 11-12 (using the compound represented by Formula 1-1 and the compound represented by Formula 8 as additive in the electrolyte, and using 5 wt% of the compound represented by Formula 1-1 and the compound represented by Formula 3 as additive in the electrolyte).

**Evaluation Example 3: Fast-Charging Charge-Discharge Characteristics and Fast-Charging DCIR Increase**

Fast-charging charge-discharge characteristics and fast-charging DC-IR increases of the lithium secondary batteries prepared in Examples 4-6 and Comparative Examples 7-12 were measured and evaluated as follows. The results thereof are shown in Table 3 below.

3-1: Fast-Charging Charge-Discharge Characteristics

Lithium secondary batteries were charged at a constant current with a current of 2.0 C-3.0 C rate at 25 °C until the voltage reached 4.2 V. Subsequently, the cycle of discharging at a constant current of 0.5 C rate until the voltage reached 2.8 V during discharging was repeated 60 times ($60^{th}$ cycle). In all the cycles of charging and discharging, a rest period of 10 minutes was provided at the end of each cycle of charging/discharging. Fast-charging capacity retention ratio at the $60^{th}$ cycle is defined using Equation 4 below.

Equation 4

$$\text{Fast-charging capacity retention ratio (\%)}=[\text{Discharge capacity at } 60^{th} \text{ cycle/Discharge capacity at } 1^{st} \text{ cycle}]\times 100$$

3-2: Fast-Charging DC-IR Increase

The lithium secondary batteries prepared in Examples 4-6 and Comparative Examples 7-12 were tested at 25 °C under the conditions of 1 C/10 sec. discharge (SOC 100) and then subjected to 60 cycles of charging and discharging at 25 °C at a fast charging rate with a current of 2.0 C to 3.0 C rate as described above in the "3-1: Fast-Charging Charge-Discharge Characteristics". Resistances were measured after 60 charge-discharge cycles at a fast charging rate, and DCIR increases (%) were calculated by Equation 5 below.

Equation 5

$$\text{DCIR increase at fast charging rate} = \text{DCIR(60 charge-discharge cycles)/DCIR(0d.)} \times 100\%$$

In Equation 3, DCIR(60 charge-discharge cycles) represents DCIR after 60 charge-discharge cycles at 25 °C, and DCIR(0d.) represents DCIR right before the 60 charge-discharge cycles.

[Table 3]

| Item | Capacity retention ratio (%) at fast charging rate | DCIR increase (%), after 60 cycles of charging and discharging at fast charging rate |
|---|---|---|
| Example 4 | 94.83 | 11.95 |
| Example 5 | 94.33 | 9.40 |
| Example 6 | 94.28 | 12.05 |
| Comparative Example 7 | 94.32 | 13.21 |
| Comparative Example 8 | 93.84 | 13.07 |
| Comparative Example 9 | 94.46 | 11.43 |
| Comparative Example 10 | 94.83 | 11.27 |
| Comparative Example 11 | 93.10 | 13.31 |
| Comparative Example 12 | 93.50 | 13.08 |

As shown in Table 3, the lithium secondary batteries prepared in Examples 4-6 showed higher capacity retention ratios at fast charging rate at 25 °C than those of the lithium secondary batteries prepared in Comparative Example 8 (using the compound represented by Formula 1-1 alone), Comparative Examples 11-12 (using the compound represented by Formula 1-1 and the compound represented by Formula 8 as additive in the electrolyte, and using 5 wt% of the compound represented by Formula 1-1 and the compound represented by Formula 3 as additive in the electrolyte). The lithium secondary batteries prepared in Examples 4-6 showed lower DC-IR increases at fast charging rate at 25 °C than those of the lithium secondary batteries prepared in Comparative Examples 7-8 (using no additives in the electrolyte, and using the compound represented by Formula 1-1 alone), Comparative Examples 11-12 (using the compound represented by Formula 1-1 and the compound represented by Formula 8 as additive in the electrolyte, and using 5 wt% of the compound represented by Formula 1-1 + the compound represented by Formula 3 in the electrolyte).

## Claims

**1.** An electrolyte for a lithium battery, the electrolyte comprising:

a lithium salt;
a non-aqueous organic solvent; and
an additive comprising a compound represented by Formula 1 and at least one compound from among compounds represented by Formula 2-1 and Formula 2-2:

Formula 1

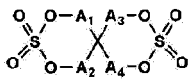

wherein in Formula 1,
$A_1$, $A_2$, $A_3$, and $A_4$ each are independently a single bond, an unsubstituted or substituted $C_1$-$C_5$ alkylene group, a carbonyl group, or a sulfinyl group.

Formula 2-1

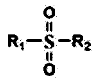

wherein in Formula 2-1,

$R_1$ is a hydrogen atom, a halogen atom, an unsubstituted or substituted $C_1$-$C_{20}$ alkyl group, or a -$(CH_2)_n$-X group, wherein n is an integer of 1 to 10 and X is a halogen atom; and

$R_2$ is a -$(CH_2)_{n'}$-N=C=O group or a -$(CH_2)_{m'}$-N=C=S group, wherein n' and m' are each from 0 to 10.

Formula 2-2

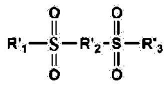

wherein in Formula 2-2,

$R_1$' and R'$_3$ are each independently a -$(CH_2)_{n'}$-N=C=O group or a -$(CH_2)$m-N=C=S group, wherein n' and m' are each from 0 to 10; and

R'$_2$ is an unsubstituted or substituted $C_1$-$C_{20}$ alkylene group.

**2.** The electrolyte of claim 1,

wherein in Formula 1, $A_1$, $A_2$, $A_3$, and $A_4$ are each independently an unsubstituted or substituted $C_1$-$C_5$ alkylene group, a carbonyl group, or a sulfinyl group,

wherein the substituted $C_1$-$C_5$ alkylene group is a $C_1$-$C_5$ alkylene group substituted with at least one functional group selected from among a halogen atom, a $C_1$-$C_5$ alkyl group, a $C_1$-$C_5$ alkyl group substituted with a halogen atom, a $C_6$-$C_{20}$ aryl group, a $C_6$-$C_{20}$ aryl group substituted with a halogen atom, a $C_6$-$C_{20}$ heteroaryl group, or a $C_6$-$C_{20}$ heteroaryl group substituted with a halogen atom.

**3.** The electrolyte of claim 1,
wherein in Formula 2-1, $R_1$ is a halogen atom, an unsubstituted or substituted $C_1$-$C_{20}$ alkyl group, or a $C_1$-$C_5$alkyl group substituted with a halogen atom.

**4.** The electrolyte of claim 1,
wherein in Formula 2-1 and Formula 2-2, $R_2$, $R_1$', and R'$_3$ are each a -$(CH_2)_{n'}$-N=C=O group, wherein n' is from 0 to 10.

**5.** The electrolyte of claim 1,
wherein the compounds represented by Formula 2-1 and Formula 2-2 comprise one or more compounds represented by Formulas 3 to 7:

Formula 3

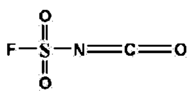

Formula 4

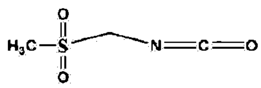

Formula 5

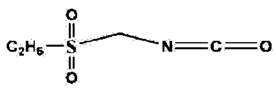

Formula 6

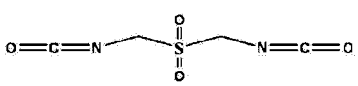

Formula 7

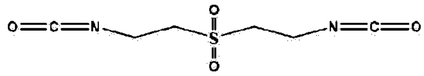

**6.** The electrolyte of claim 1,
wherein in the electrolyte, a content of the compound represented by Formula 1 is equal to or greater than a content of the at least one compound from among compounds represented by Formula 2-1 and Formula 2-2.

**7.** The electrolyte of claim 1,
wherein in the electrolyte, a content of the compound represented by Formula 1 is from 0.01 wt% to 5 wt% with respect to a total weight of the electrolyte.

**8.** The electrolyte of claim 1,
wherein in the electrolyte, a content of the at least one compound represented by Formula 2-1 and Formula 2-2 is from 0.01 wt% to 3 wt% with respect to a total weight of the electrolyte.

**9.** A lithium battery comprising:

a positive electrode comprising a positive electrode active material;
a negative electrode comprising a negative electrode active material; and
an electrolyte according to any one of claims 1 to 8, positioned between the positive electrode and the negative electrode.

**10.** The lithium battery of claim 9,
wherein the positive electrode active material comprises a compound represented by Formula 9:

Formula 9 $LiNi_xCo_yM_{1-x-y}O_{2-z}A_z$

wherein in Formula 9,

M is at least one selected from among aluminum (Al), manganese (Mn), vanadium (V), magnesium (Mg), gallium (Ga), tungsten (W), molybdenum (Mo), iron (Fe), chromium (Cr), copper (Cu), zinc (Zn), and titanium (Ti);
A is at least one selected from among F, S, Cl, and Br; and
$0 \leq x \leq 1$,$0 \leq y \leq 1$,$0 \leq z \leq 0.3$, and $x+y \leq 1$.

**11.** The lithium battery of claim 10,
wherein in Formula 9, $0.8 \leq x < 1$, and M is at least one selected from among aluminum (Al), manganese (Mn), vanadium (V), magnesium (Mg), molybdenum (Mo), iron (Fe), chromium (Cr), copper (Cu), zinc (Zn), and titanium (Ti).

**12.** The lithium battery of claim 9,
wherein the negative electrode active material comprises a carbon-based material, a silicon-based material, or a silicon-carbon-based composite.

**13.** The lithium battery of claim 9,
wherein the negative electrode active material is a silicon-carbon-based composite, wherein a content of the silicon is 1 wt% or more with respect to a total weight of the silicon-carbon-based composite.

FIG. 1

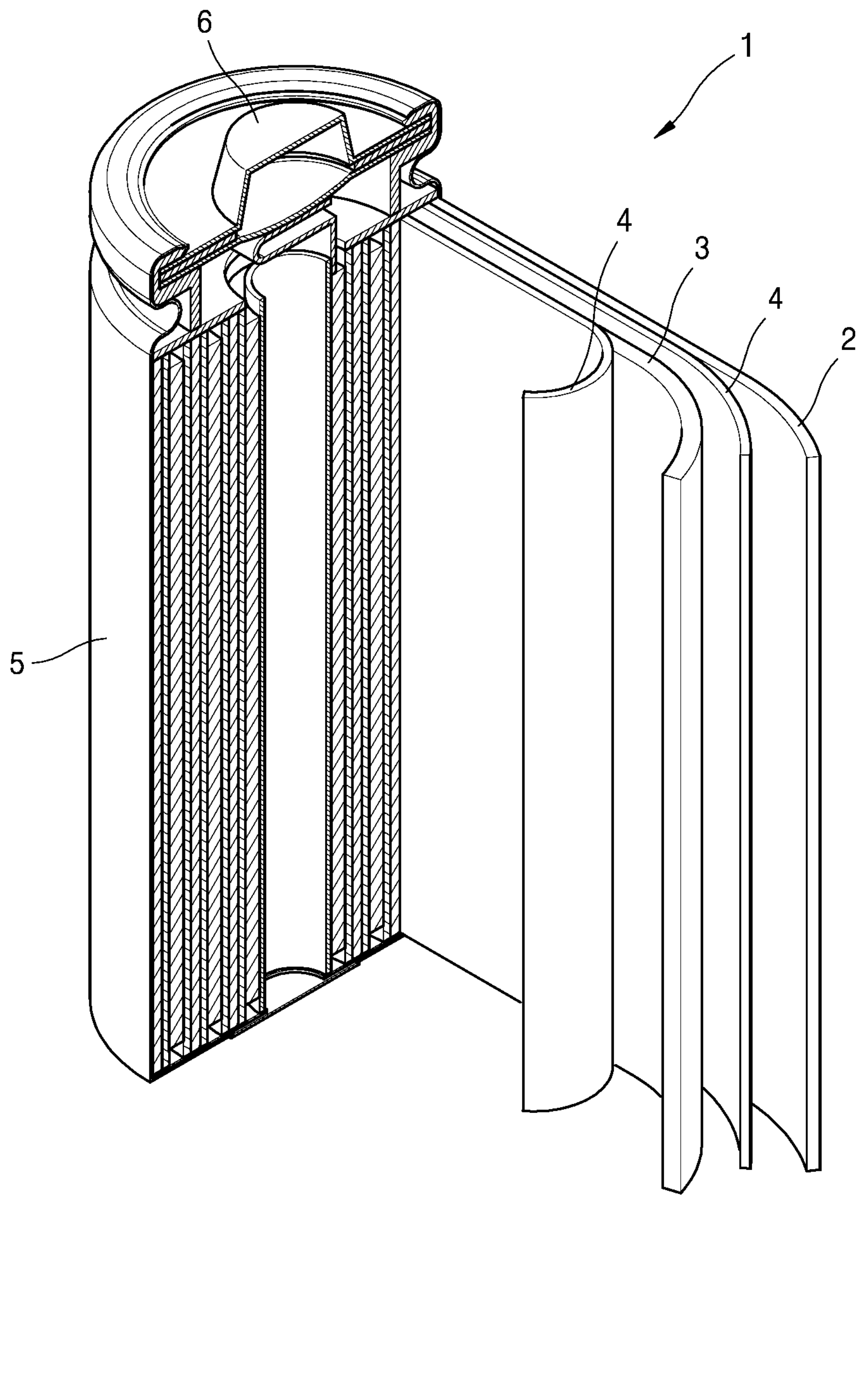

**INTERNATIONAL SEARCH REPORT**

International application No.
**PCT/KR2021/018790**

**A. CLASSIFICATION OF SUBJECT MATTER**

**H01M 10/0567**(2010.01)i; **H01M 4/525**(2010.01)i; **H01M 4/587**(2010.01)i; **H01M 4/38**(2006.01)i; **H01M 4/36**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/42(2006.01); H01M 4/36(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 전지(lithium battery), 전해질(electrolyte), 비수계 유기용매(non-aqueous organic solvent), 황 화합물(sulfur compound)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0136655 A (SK CHEMICALS CO., LTD.) 26 December 2018 (2018-12-26) See claim 1; paragraphs [0027] and [0040]; table 2; and example 6. | 1-13 |
| Y | KR 10-2019-0064272 A (SAMSUNG SDI CO., LTD.) 10 June 2019 (2019-06-10) See claims 1, 5, 7 and 9; and paragraphs [0095], [0127] and [0140]. | 1-13 |
| A | CN 110931869 A (GUANGZHOU TINCI MATERIALS TECHNOLOGY CO., LTD.) 27 March 2020 (2020-03-27) See claims 1-10. | 1-13 |
| A | KR 10-2016-0141667 A (SAMSUNG SDI CO., LTD.) 09 December 2016 (2016-12-09) See entire document. | 1-13 |
| A | WO 2014-157591 A1 (MITSUBISHI CHEMICAL CORPORATION) 02 October 2014 (2014-10-02) See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 March 2022** | **18 March 2022** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2019)

**INTERNATIONAL SEARCH REPORT**
**Information on patent family members**

International application No.
**PCT/KR2021/018790**

| Patent document cited in search report | Publication date (day/month/year) | Patent family member(s) | Publication date (day/month/year) |
|---|---|---|---|
| KR 10-2018-0136655 A | 26 December 2018 | None | |
| KR 10-2019-0064272 A | 10 June 2019 | None | |
| CN 110931869 A | 27 March 2020 | WO 2021-109687 A1 | 10 June 2021 |
| KR 10-2016-0141667 A | 09 December 2016 | US 10170794 B2 | 01 January 2019 |
| | | US 2016-0351963 A1 | 01 December 2016 |
| WO 2014-157591 A1 | 02 October 2014 | CN 105074994 A | 18 November 2015 |
| | | CN 105074994 B | 19 October 2018 |
| | | CN 109301162 A | 01 February 2019 |
| | | JP 2018-125313 A | 09 August 2018 |
| | | JP 2020-009784 A | 16 January 2020 |
| | | JP 2021-106174 A | 26 July 2021 |
| | | JP 6344381 B2 | 20 June 2018 |
| | | JP 6906476 B2 | 21 July 2021 |
| | | KR 10-2015-0135278 A | 02 December 2015 |
| | | KR 10-2020-0138438 A | 09 December 2020 |
| | | KR 10-2188818 B1 | 09 December 2020 |
| | | KR 10-2366343 B1 | 23 February 2022 |
| | | US 2016-0013517 A1 | 14 January 2016 |
| | | US 9947965 B2 | 17 April 2018 |

Form PCT/ISA/210 (patent family annex) (July 2019)